# EUROPÄISCHE PATENTSCHRIFT

(11) **EP 3 837 623 B1**
(45) Veröffentlichungstag und Bekanntmachung des Hinweises auf die Patenterteilung: **21.09.2022**
(21) Anmeldenummer: 18783357.9
(22) Anmeldetag: 15.08.2018
(51) Int. Cl.: G06F 21/32, G06F 21/34

(54) **VERFAHREN ZUR ERFASSUNG UND ANSCHLIESSENDEN GENERIERUNG VON DATEN FÜR EINEN NUTZER EINES SELBSTBEDIENUNGSTERMINALS**
METHOD FOR CAPTURING AND SUBSEQUENTLY GENERATING DATA FOR A USER OF A SELF-SERVICE TERMINAL
PROCÉDÉ DE DÉTECTION ET ENSUITE DE GÉNÉRATION DE DONNÉES POUR UN UTILISATEUR D'UN TERMINAL EN LIBRE-SERVICE

(43) Veröffentlichungstag der Anmeldung: 23.06.2021
(73) Patentinhaber: Scheld, Daniel, 53113 Bonn (DE)
(72) Erfinder: Scheld, Daniel, 53113 Bonn (DE)
(74) Vertreter: Limbeck, Achim
(86) Internationale Anmeldenummer: PCT/DE2018/100712
(87) Internationale Veröffentlichungsnummer: WO 2020/035097

(56) Entgegenhaltungen:
- EP-A1- 1 486 855
- EP-A2- 1 248 238
- EP-A2- 1 715 461
- GB-A- 2 174 313
- Wikipedia: "Personalausweis (Deutschland)", , 24 June 2013 (2013-06-24), XP055087172, Retrieved from the Internet: URL:http://de.wikipedia.org/w/index.php?ti tle=Personalausweis_%28Deutschland%29&oldi d=119880669 [retrieved on 2013-11-07]

## Beschreibung

### Technisches Gebiet

Die vorliegende Erfindung betrifft ein Verfahren zur Erfassung und anschließenden Generierung von Daten für einen Nutzer eines Selbstbedienungsterminals, welches zumindest ein Display sowie mindestens ein Eingabefeld umfasst. Ferner betrifft die vorliegende Erfindung ein Selbstbedienungsterminal.

### Stand der Technik

Es ist aus dem Stand der Technik bekannt, dass zur Abwicklung unterschiedlicher Prozesse wie bspw. zur Durchführung einer bestimmten Transaktion (sowohl online als auch in der Realität) in einem Bestellprozess eine Identitätsüberprüfung erforderlich ist, mittels der die Angaben des Nutzers überprüft und somit eine Freigabe des vom Nutzer ausgewählten Prozesses erreicht wird. Zumeist werden hierzu mittels Plausibilisierung und Überprüfung unterschiedlicher Angaben des Nutzers eine Identitätsüberprüfung durchgeführt, was aber zumeist keine hinreichende Sicherheit darstellt, da derartige Angaben dritten Personen ggfs. bekannt sind oder durch diese leicht ermittelt werden können. Oftmals erfolgen Identitäts-überprüfungen aber auch durch das den Prozess abwickelnde Personal mittels optischer Erfassung. Es sind aus dem Stand der Technik weiterhin Vorrichtungen bekannt, die zur Durchführung einer automatisierten Identitätsüberprüfung ausgebildet sind und bei denen die Identifizierung eines Nutzers durch die Ermittlung dokumentspezifischer Merkmale in Form von biometrischen Scans erfolgt.

Keines dieser Verfahren und Systeme ist allerdings in der Anlage, eine für unterschiedliche Prozesse ausgelegte Lösung zur Auswahl und anschließenden Identifizierung zu bieten. Vielmehr sind bekannte Lösungen sehr individuell auf bestimmte Prozesse, welche nicht zur Auswahl stehen, beschränkt.

Aus der EP 1 248 238 A2 ist ein Verfahren zur Erfassung und anschließenden Generierung von Daten für einen Nutzer eines Selbstbedienungsterminals bekannt, welches zumindest ein Display sowie mindestens ein Eingabefeld umfasst, wobei dieses Verfahren folgende Schritte umfasst: a) Einlesen mindestens eines amtlichen Lichtbilddokuments und/oder elektronischen Dokuments auf einem elektronischen Medium mittels mindestens eines Einleseorgans zur Erfassung amtlicher Lichtbilddokumente und/oder auf einem elektronischen Medium gespeicherter Dokumente, b) optische Erfassung mindestens eines dokumentspezifischen Merkmals des Nutzers und dessen -zumindest temporäre Speicherung, c) Authentizitäts- und/oder Legitimationsprüfung in Form eines Abgleichs der erfassten dokumentspezifischen Merkmale gegen über den im Lichtbilddokument und/oder auf dem elektronischen Dokument eingelesenen Originalwerte des Nutzers, wobei vorgesehen ist, dass eine Aktivierung erst dann erfolgt, wenn biometrische Daten, die vom Benutzer erfasst wurden, mit den entsprechenden Daten, die auf dem Datenträger gespeichert sind, verglichen wurden und dieser Vergleich eine Übereinstimmung der Daten ergab.

Derartige biometrische Daten können gemäß der EP 1 248 238 A2 beispielsweise Merkmale des Fingerabdrucks des Benutzers oder Merkmale des Gesichts sein. Dabei weist die Vorrichtung zur Nutzung von Behördendienstleistungen in diesem Ausführungsbeispiel zur Erfassung der biometrischen Daten eine Fingerabdruck-Erfassungseinheit auf, die den Fingerabdruck des Benutzers erfasst und die den Merkmalen des Fingerabdrucks entsprechenden Daten erzeugt, oder eine Kamera-Einheit auf, die das Abbild des Gesichts des Benutzers erfasst und die den Merkmalen des Gesichts entsprechenden Daten erzeugt. Eine derartige Fingerabdruck-Erfassungseinheit oder Kamera-Einheit ist mit der Datenverarbeitungsanlage verbunden. In einem Ausführungsbeispiel der Erfindung können die Merkmale des Gesichts des Bürgers auf dem Datenträger in Form eines Fotos gespeichert sein.

### Darstellung der Erfindung

Der vorliegenden Erfindung liegt die Aufgabe zu Grunde, ein Verfahren zu schaffen, welches die vorgenannten Probleme ausräumt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Erfindungsgemäß ist eine der eingangs genannten Art dadurch gekennzeichnet durch nachfolgende Verfahrensschritte, wobei der Verfahrensablauf nicht auf die ausgeführte Reihenfolge einzelner Verfahrensschritte begrenzt sein soll.

Es erfolgt eine Anzeige mehrerer unterschiedlicher in einer internen oder externen Datenbank abgelegter Produkte und/oder Dienstleistungen auf dem Display eines Selbstbedienungsterminals, welche dem Nutzer zur Auswahl mittels des mindestens einen Eingabefeldes zur Verfügung gestellt werden. Derartige Produkte und/oder Dienstleistungen können vielfältig sein, daher seien hier nur einige Beispiele genannt wie die Bestellung amtlicher Dokumente, Geldauszahlungen, Buchungen, Reservierungen, Produktkauf, etc.). Kern der Erfindung ist es, dem Nutzer im Prozess eine Vielzahl unterschiedlicher Produkte und/oder Dienstleistungen zur Auswahl anzubieten.

In einem weiteren Verfahrensschritt, erfolgt eine - zumindest temporäre - Speicherung der vom Nutzer im Rahmen der Produkt- und/oder Dienstleistungsauswahl erhobenen Daten zur weiteren Verwertung.

Ein weiterer Verfahrensschritt sieht vor, dass mindestens ein amtliches Lichtbilddokuments und/oder elektronisches Dokuments auf einem elektronischen Medium mittels mindestens einem Einleseorgan zur Erfassung amtlicher Lichtbilddokumente und/oder auf einem elektronischen Medium gespeicherter Dokumente eingelesen wird. Hierbei kann es sich bspw. um einen Personalausweis, Reisepass, Führerschein oder andere Lichtbildokumente oder um auf einem elektronischen Medium elektronisch abgelegte Dokumente (bspw. die digitale Unterschrift oder digital abgelegte Bilder auf einem Personalausweis) handeln. Es ist dabei vorgesehen, dass die amtlichen Lichtbilddokumente durch fototechnische Ablichtung in den Lichtspektren Nah-Infrarot und Weißlicht und Ultraviolettlicht und Schräglicht und Phasenausgerichtetes Licht aufgezeichnet werden. Innerhalb dieses Prozessabschnitts können vorteilhafterweise weiterhin dokumentspezifische Sicherheitsmerkmale anhand der jeweiligen gesetzgeberischen Dokumentation der Sicherheitsmerkmale geprüft, Textbestandteile und/oder Lichtbilder im Nahinfraroten sowie weißem und ultravioletten Licht, Lichtbilder, Fingerabdrücke, Irisdaten und/oder Irisbilder Textbestandteile, Dokumentabbilder, Signaturen und/oder Zertifikate von vorhandenen elektronischen Chips extrahiert werden. Weiterhin ist es vorzugsweise vorgesehen, durch Lichtbildaufzeichnung ein Livebild des Ausweisnutzers und/oder Fingerabdrücke des Ausweisnutzers zur weiteren Analyse temporär aufzuzeichnen.

Ein weiterer Verfahrensschritt besteht darin, eine optische Erfassung mindestens eines dokumentspezifischen Merkmals des Nutzers und dessen - zumindest temporäre - Speicherung durchzuführen. Der optischen Erfassung dokumentspezifischer Merkmale können bekannte Verfahren zugrunde gelegt werden, wie bspw. die biometrische Scan einer Person wie bspw. das Iris- und Gesichtsscanning, das Scannen des Fingerabdrucks oder dergleichen geartete biometrische Scanverfahren und - systeme, welche aus dem Stand der Technik hinlänglich bekannt sind und an dieser Stelle nicht näher erörtert werden sollen.

Nach der Erfassung mindestens eines dokumentspezifischen Merkmals des Nutzers sowie dem Einlesen von Lichtbilddokumenten und/oder elektronischen Dokument auf einem elektronischen Medium ist vorgesehen, dass eine Authentizitäts- und Legitimationsprüfung in Form eines Abgleichs der erfassten dokumentspezifischen Merkmale gegenüber den im Lichtbilddokument und/oder auf dem elektronischen Dokument eingelesenen Originalwerte des Nutzers erfolgt. Der Abgleich wird vorteilhafterweise durch ein im Selbstbedienungsterminal installiertes oder extern gelagertes und für den Zugriff durch das Selbstbedienungsterminal ausgelegtes Programm durchgeführt, das mindestens einen Abgleich-Algorithmus beinhaltet.

Bei Vorliegen einer positiven Authentizitäts- und Legitimationsprüfung wird verfahrensgemäß ein elektronisches und/oder haptisches Dokument generiert und an den Nutzer und/oder an einen oder mehrere Empfänger ausgegeben bzw. übermittelt, welches den Nutzer zum Erhalt und/oder zur Wahrnehmung und/oder zur Durchführung der vorgenommenen Produkt- und/oder Dienstleistungsauswahl legitimiert.

Erfindungsgemäß ist das vorliegende Verfahren dadurch gekennzeichnet, dass aus den ermittelten Daten ein optisch lesbarer Code generiert, dieser über ein Ausgabeorgan 12 ausgedruckt, ausgegeben und/oder über Schnittstellen an Fremdsysteme zur weiteren Einsichtnahme und/oder Bearbeitung weitergeleitet oder dem Nutzer ausgehändigt wird, welches den Nutzer zum Erhalt und/oder zur Wahrnehmung und/oder zur Durchführung der vorgenommenen Produkt- und/oder Dienstleistungsauswahl legitimiert.

In einer besonders vorteilhaften Ausführungsform der Erfindung ist vorgesehen, dass auf der Basis der ermittelten Daten ein benutzerdefiniertes Scoring anhand nach Prüfungen vorliegender Ergebnislisten durchgeführt wird, wobei eine sichtbare und/oder unsichtbare Ausgabe des Scoringergebnisses und/oder ein Melde- und/oder Reportingverfahren ausgelöst wird.

Weiterhin ist es vorteilhaft, die ermittelten Daten in einem oder mehreren der vom Nutzer durchgeführten Produkt- und/oder Dienstleistungsauswahl zugeordneten Formular/en einzutragen, welches vorteilhafterweise einem bestimmten Empfänger, bspw. über geeignete Schnittstellen an ein Fremdsystem, zur weiteren Einsichtnahmen und/oder Bearbeitung übergeben oder dem Nutzer ausgehändigt wird. In diesem Zusammenhang ist es auch denkbar, dass aus den ermittelten Daten ein optisch lesbarer Code generiert und dieser ausgedruckt wird.

Das Fremdsystem kann bspw. ein System zur Geldeinnahme oder -ausgabe sein.

An dem Fremdsystem (bspw. eine Kasse in einem Supermarkt) wird vorzugsweise ein Livebild, Lichtbild, Ausweisbild oder eine dergleichen geartete Aufnahme des Nutzers angezeigt, mittels dem eine erneute Identitätsüberprüfung vorgenommen werden kann.

Es kann überdies vorteilhaft sein, dass bei Fehlern, unerlaubten Hardwarezugriffen und/oder Softwarezugriffen das System des Selbstbedienungsterminals beendet und aus einem verschlüsselt gespeicherten Datenabbild in den Ursprungszustand zurückversetzt wird.

Ganz besonders vorteilhaft ist es vorgesehen, dass - vorzugsweise sämtliche - Verfahrensschritte revisionssicher dokumentiert werden.

### Kurzbeschreibung der Zeichnung

Weitere Ziele, Merkmale, Vorteile und Anwendungsmöglichkeiten des erfindungsgemäßen Verfahrens ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

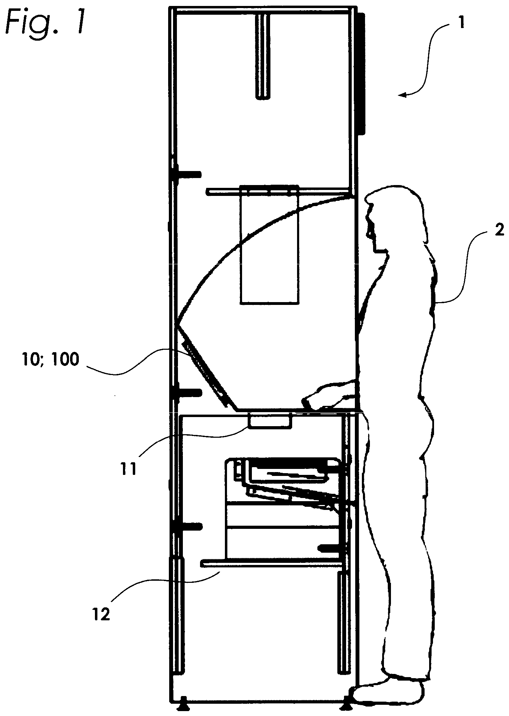

In der Zeichnung zeigt
Fig.1 ein Selbstbedienungsterminal in der Seitenansicht.

### Ausführung der Erfindung

Wie aus Fig. 1 ersichtlich, beschreibt die vorliegende Erfindung weiterhin ein Selbstbedienungsterminal 1 zur Erfassung und anschließenden Generierung von Daten für einen Nutzer, welches zumindest ein Display 10 sowie mindestens ein Eingabefeld 100 umfasst. Das Selbstbedienungsterminal 1 beinhaltet die nachfolgenden Merkmale:

Es umfasst eine Datenbank oder eine Zugriffseinheit auf eine externe Datenbank mit unterschiedlichen Produkten und/oder Dienstleistungen umfasst, welche dem Nutzer 2 auf dem Display 10 zur Auswahl mittels des mindestens einen Eingabefeldes 100 zur Verfügung gestellt werden.

Weiterhin ist ein Speicher oder eine Zugriffseinheit auf einen externen Speicher zur - zumindest temporären - Speicherung der vom Nutzer 2 im Rahmen der Produktauswahl erhobenen Daten zur weiteren Verwertung vorgesehen ist.

Das Selbstbedienungsterminal 1 umfasst ein Einleserogan 11, mittels dem amtliche Lichtbilddokumente und/oder auf einem elektronischen Medium gespeicherte Dokumente und mindestens ein dokumentspezifisches Merkmal erfasst und anschließend - zumindest temporär - auf einem geeigneten Medium gespeichert werden können.

Das Selbstbedienungsterminal 1 umfasst ferner eine Auswerteeinheit oder eine Zugriffseinheit auf eine externe Auswerteeinheit zur Durchführung einer Authentizitäts- und Legitimationsprüfung in Form eines Abgleichs sämtlicher erhobener Daten und Lichtbilder gegenüber den im Lichtbilddokument und/oder auf dem elektronischen Dokument gespeicherten Originalwerte des Nutzers.

Überdies ist ein Ausgabeorgan 12 vorgesehen, mittels dem bei Vorliegen einer positiven Authentizitäts- und Legitimationsprüfung ein elektronisches und/oder haptisches Dokument an den Nutzer und/oder an einen oder mehrere Empfänger ausgegeben und/oder übermittelt wird, welches den Nutzer zum Erhalt und/oder zur Wahrnehmung und/oder zur Durchführung der vorgenommenen Produkt- und/oder Dienstleistungsauswahl legitimiert.

In einer Ausführungsform der Erfindung ist das Ausgabeorgan 12 ein Drucker, bspw. speziell ein Barcodedrucker. Das Ausgabeorgan 12 kann weiterhin eine Schnittstelle zur Anbindung des Selbstbedienungsterminals 1 an Fremdsysteme sein oder eine solche umfassen.

### Ausführungsbeispiel zur Aktivierung einer Prepaid-Telefonkarte

Ein Nutzer nähert sich dem Selbstbedienterminal 1. Eine biometrische Kamera hat diesen bereits erfasst und es wird ein Template (einschließlich der Erkennung von Lebendmerkmalen) vom Gesicht erstellt. Der Nutzer wählt auf dem Eingabefeld 100 ein Produkt aus. In diesem Fall die Identifikation nach § 111 TkG zur Aktivierung einer Prepaid-Telefonkarte. Das Selbstbedienterminal 1 fordert den Nutzer auf, ein gültiges Ausweisdokument auf dem Einleseorgans 11 (hier ein Pass-Scanner) zu platzieren. Dazu kann ein Video oder mehrere Piktogramme auf dem Display 10 zur Hilfe und Erläuterung angezeigt werden. Es startet mit dem Einlegen des Ausweisdokumentes automatisch der Scanvorgang. Das Dokument wird klassifiziert und ggfs. der Nutzer aufgefordert, das Dokument zu wenden (Nur bei zweiseitigen Ausweisdokumenten). Es wird eine Echtheitsanalyse des Ausweisdokumentes durchgeführt, dem Nutzer jedoch nicht angezeigt. Im Anschluss werden die biometrischen Merkmale des Nutzergesichts (Template) mit den biometrischen Merkmalen der Gesichtsbilder des Ausweises verglichen. Im Hintergrund werden sämtliche zulässige Datenquellen zur Identitätsüberprüfung, der Ausweiskontrolle und zur Gefahrenabwehr, abgefragt. Im Anschluss werden die Textmerkmale des Ausweises ausgelesen und damit die Vorgangs- / Produkttypischen Formulare ausgefüllt und zur Korrektur angeboten. Mit der Auswahl einer Funktion zum Abschluss des Verfahrens wird der Vorgang beendet und die relevanten Daten regelkonform an den zuständigen Mobilfunkbetreiber weitergeleitet, damit die Mobilfunkkarte aktiviert oder gesperrt werden kann. Das Verfahren ist damit beendet.

### Ausführungsbeispiel zur Durchführung eines Geldtransfers

Ein Nutzer nähert sich dem Selbstbedienterminal 1. Eine biometrische Kamera hat diesen bereits erfasst und es wird ein Template (einschließlich der Erkennung von Lebendmerkmalen) vom Gesicht erstellt. Der Nutzer wählt auf dem Eingabefeld 100 ein Produkt aus. In diesem Fall ein Geldtransfer an eine Person / Firma im In- oder Ausland. Das Selbstbedienterminal 1 fordert den Nutzer auf, ein gültiges Ausweisdokument auf dem Einleseorgans 11 (hier ein Pass-Scanner) zu platzieren. Dazu kann ein Video oder mehrere Piktogramme auf dem Display 10 zur Hilfe und Erläuterung angezeigt werden. Es startet mit dem Einlegen des Ausweisdokumentes automatisch der Scanvorgang. Das Dokument wird klassifiziert und ggfs. der Nutzer aufgefordert, das Dokument zu wenden (Nur bei zweiseitigen Ausweisdokumenten). Es wird eine Echtheitsanalyse des Ausweisdokumentes durchgeführt, dem Nutzer jedoch nicht angezeigt. Im Anschluss werden die biometrischen Merkmale des Nutzergesichts (Template) mit den biometrischen Merkmalen der Gesichtsbilder des Ausweises verglichen. Im Hintergrund werden sämtliche zulässige Datenquellen zur Identitätsüberprüfung, der Ausweiskontrolle und zur Gefahrenabwehr, abgefragt. Der Nutzer erfasst Zielland, Empfänger der Zahlung, Währung und gibt den zu transferierenden Geldbetrag sowie die Währung an. Es können ein Verwendungszweck sowie weitere Informationen erfasst werden. Es erfolgt eine regelkonforme Risikoanalyse. Im Rahmen der Analyse werden dem Nutzer einzelfallabhängige Fragen gestellt, welche dieser durch Auswahl von Antworten am Display 10 und/oder mittels des Eingabefeldes 100 beantworten muss. Sodann wird ein Zahlungsbeleg ausgedruckt, welchen der Nutzer zu unterschreiben hat. Ist der Beleg unterschrieben, so fordert das Selbstbedienterminal 1 den Nutzer auf, den Beleg in ein vordefiniertes Feld zu legen, damit der Beleg abgelichtet werden kann. Bei der Ablichtung überprüft der Automat, ob es sich um das zum aktuellen Vorgang gehörende Dokument handelt und ob der Beleg an der richtigen Stelle unterzeichnet ist. Der Beleg enthält zu diesem Zweck einen oder mehrere maschinenlesbare Zeichen wie z.B. Strichcodes. Ist das Verfahren abgeschlossen, so geht der Nutzer zur Bargeldkasse der Unternehmung, in dessen Räumen sich der Automat befindet. An der Kasse wird der Beleg dann mittels des Strichcodes erfasst. Die Kasse führt nun eine Abfrage des zugeordneten Produktes an der Datenbank des Selbstbedienterminals 1 durch. Dabei wird dem Kassierer ein aktuelles Lichtbild, sowie Name, Vorname und Alter des Nutzers angezeigt. Der zuständige Kassierer bestätigt sodann ob es sich um die gemeinte Person handelt oder bricht den Vorgang ab (zweistufige Identifizierung). Die Kasse übernimmt bei erfolgreicher Identifizierung sodann das Produkt, die Zahlrichtung, den Betrag und weitere Daten in die Kassenrolle zwecks Ein- oder Auszahlung. Sobald der Betrag ein- bzw. ausgezahlt ist, erfolgt die Abfrage der Automatendaten und der Datenbank eines Dienstleisters für den Geldtransfer, um die Zahlung entsprechend zu vermerken und mit dem Transaktionscode auf dem Kassenzettel zu vermerken. Nach Ausdruck des Kassenzettels erhält der Nutzer diesen und der Vorgang ist beendet.

Das erfindungsgemäße Verfahren beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Selbstbedienungsterminal
- 2: Nutzer
- 10: Display
- 11: Einleseorgan
- 12: Ausgabeorgan in Form eines Druckers
- 100: Eingabefeld

## Patentansprüche

1. Verfahren zur Erfassung und anschließenden Generierung von Daten für einen Nutzer (2) eines Selbstbedienungsterminals (1), welches zumindest ein Display (10) sowie mindestens ein Eingabefeld (100) umfasst, wobei das Verfahren folgende Verfahrensschritte beinhaltet:
a) Anzeige mehrerer unterschiedlicher in einer internen oder externen Datenbank abgelegter Produkte und/oder Dienstleistungen auf dem Display (10), welche dem Nutzer (2) zur Auswahl mittels des mindestens einen Eingabefeldes (100) zur Verfügung gestellt werden,
b) - zumindest temporäre - Speicherung der vom Nutzer (2) im Rahmen der Produkt- und/oder Dienstleistungsauswahl erhobenen Daten zur weiteren Verwertung,
c) Einlesen mindestens eines amtlichen Lichtbilddokuments und/oder elektronischen Dokuments auf einem elektronischen Medium mittels mindestens eines Einleseorgans (11) zur Erfassung amtlicher Lichtbilddokumente und/oder auf einem elektronischen Medium gespeicherter Dokumente,
d) optische Erfassung mindestens eines dokumentspezifischen Merkmals des Nutzers und dessen - zumindest temporäre - Speicherung,
e) Authentizitätsprüfung in Form einer Echtheitsanalyse des Lichtbilddokuments und/oder elektronischen Dokuments,
und
f) Authentizitätsprüfung und Legitimationsprüfung in Form eines Abgleichs der erfassten dokumentspezifischen Merkmale gegenüber den im Lichtbilddokument und/oder auf dem elektronischen Dokument eingelesenen Originalwerte des Nutzers, wobei im Rahmen der Legitimationsprüfung die biometrischen Merkmale des Nutzergesichts mittels eines biometrischen Scans des Nutzers erfasst werden und mit den biometrischen Merkmalen des Gesichtsbildes des Lichtbilddokuments des Nutzers des Selbstbedienungsterminals verglichen werden,
g) wobei bei Vorliegen einer positiven Authentizitäts- und Legitimationsprüfung eine Generierung und anschließende Ausgabe und/oder Übermittlung eines elektronischen und/oder haptischen Dokuments an den Nutzer (2) und/oder an einen oder mehrere Empfänger erfolgt, welches den Nutzer zum Erhalt und/oder zur Wahrnehmung und/oder zur Durchführung der vorgenommenen Produkt- und/oder Dienstleistungsauswahl legitimiert
**dadurch gekennzeichnet, dass**
aus den ermittelten Daten ein optisch lesbarer Code generiert, dieser über ein Ausgabeorgan (12) ausgedruckt, ausgegeben und/oder über Schnittstellen an Fremdsysteme zur weiteren Einsichtnahme und/oder Bearbeitung weitergeleitet oder dem Nutzer ausgehändigt wird.

2. Verfahren nach Anspruch 1,
**dadurch gekennzeichnet, dass**
das Fremdsystem ein System zur Geldeinnahme oder -ausgabe ist.

3. Verfahren nach einem der Ansprüche 1 oder 2,
**dadurch gekennzeichnet, dass**
an dem Fremdsystem ein Livebild, Lichtbild, Ausweisbild oder eine dergleichen geartete Aufnahme des Nutzers angezeigt wird, mittels dem eine erneute Identitätsüberprüfung vorgenommen werden kann.

4. Verfahren nach einem der vorangegangenen Ansprüche,
**dadurch gekennzeichnet, dass**
bei Fehlern, unerlaubten Hardwarezugriffen und/oder Softwarezugriffen das System des Selbstbedienungsterminals (1) beendet und aus einem verschlüsselt gespeicherten Datenabbild in den Ursprungszustand zurückversetzt wird.

5. Verfahren nach einem der vorangegangenen Ansprüche,
**dadurch gekennzeichnet, dass**
sämtliche Verfahrensschritte revisionssicher dokumentiert werden.

6. Selbstbedienungsterminal (1) zur Erfassung und anschließenden Generierung von Daten für einen Nutzer, welches zumindest ein Display (10) sowie mindestens ein Eingabefeld (100) umfasst, wobei
a) das Selbstbedienungsterminal (1) eine Datenbank oder eine Zugriffseinheit auf eine externe Datenbank mit unterschiedlichen Produkten und/oder Dienstleistungen umfasst, welche dem Nutzer (2) auf dem Display (10) zur Auswahl mittels des mindestens einen Eingabefeldes (100) zur Verfügung gestellt werden, wobei
b) ein Speicher oder eine Zugriffseinheit auf einen externen Speicher zur - zumindest temporären - Speicherung der vom Nutzer (2) im Rahmen der Produktauswahl erhobenen Daten zur weiteren Verwertung vorgesehen ist, und
c) das Selbstbedienungsterminal (1) ein Einleserorgan (11) umfasst, mittels dem amtliche Lichtbilddokumente und/oder auf einem elektronischen Medium gespeicherte Dokumente und mindestens ein dokumentspezifisches Merkmal erfasst und - zumindest temporär - gespeichert werden, wobei
d) das Selbstbedienungsterminal (1) ferner eine Auswerteeinheit oder eine Zugriffseinheit auf eine externe Auswerteeinheit zur Durchführung einer Authentizitäts- und- Legitimationsprüfung in Form eines Abgleichs sämtlicher erhobener Daten und Lichtbilder gegenüber den im Lichtbilddokument und/oder auf dem elektronischen Dokument gespeicherten Originalwerte des Nutzers und ferner
e) ein Ausgabeorgan (12) umfasst, mittels dem bei Vorliegen einer positiven Authentizitäts- und Legitimationsprüfung ein elektronisches und/oder haptisches Dokument an den Nutzer (2) und/oder an einen oder mehrere Empfänger ausgegeben und/oder übermittelt wird, welches den Nutzer (2) zum Erhalt und/oder zur Wahrnehmung und/oder zur Durchführung der in a) vorgenommenen Produkt- und/oder Dienstleistungsauswahl legitimiert,
**dadurch gekennzeichnet, dass**
das Ausgabeorgan (12) ein Drucker oder eine Schnittstelle zur Anbindung des Selbstbedienungsterminals (1) an Fremdsysteme ist, mittels dem die ermittelten Daten, welche zu einem optisch lesbaren Code generiert werden, ausgedruckt, ausgegeben und/oder über die Schnittstellen an Fremdsysteme zur weiteren Einsichtnahme und/oder Bearbeitung weitergeleitet oder dem Nutzer ausgehändigt wird.

## Claims

1. Method for recording and subsequently generating data for a user (2) of a self-service terminal (1) which comprises at least one display (10) and at least one input field (100), the method comprising the following method steps:
a) Display of several different products and/or services stored in an internal or external database on the display (10), which are made available to the user (2) for selection by means of the at least one input field (100),
b) - at least temporary - storage of the data collected from the user (2) in the context of the product and/or service selection for further utilisation,
c) reading at least one official photographic document and/or electronic document on an electronic medium by means of at least one reading device (11) for capturing official photographic documents and/or documents stored on an electronic medium,
d) optical recording of at least one document-specific feature of the user and its - at least temporary - storage,
e) authenticity verification in the form of an authenticity analysis of the photographic and/or electronic document; and
f) Authenticity verification and legitimation verification in the form of a comparison of the captured document-specific features against the original values of the user read in the photo document and/or on the electronic document, whereby in the context of the legitimation verification the biometric features of the user's face are captured by means of a biomeltric scan of the user and are compared with the biometric features of the facial image of the photo document of the user of the self-service terminal,
g) whereby, in the event of a positive authenticity and legitimation check, an electronic and/or haptic document is generated and then issued and/or transmitted to the user (2) and/or to one or more recipients, which legitimises the user to receive and/or to perceive and/or to carry out the product and/or service selection made
**characterised in that**
an optically readable code is generated from the determined data, this is printed out via an output device (12), output and/or forwarded via interfaces to external systems for further inspection and/or processing or handed over to the user.

2. Method according to claim 1,
**characterised in that**
the third-party system is a system for receiving or spending money.

3. Method according to one of claims 1 or 2,
**characterised in that**
a live image, photograph, ID image or similar type of image of the user is displayed on the third-party system, by means of which a renewed identity check can be carried out.

4. A method according to any one of the preceding claims,
**characterised in that**
in the event of errors, unauthorised hardware access and/or software access, the system of the self-service terminal (1) is terminated and restored to its original state from an encrypted stored data image.

5. A method according to any one of the preceding claims,
**characterised in that**
all procedural steps are documented in an audit-proof manner.

6. Self-service terminal (1) for the acquisition and subsequent generation of data for a user, which comprises at least one display (10) and at least one input field (100), wherein
a) the self-service terminal (1) comprises a database or an access unit to an external database with different products and/or services which are made available to the user (2) on the display (10) for selection by means of the at least one input field (100), wherein
b) a memory or an access unit to an external memory is provided for - at least temporary - storage of the data collected from the user (2) in the context of the product selection for further utilisation, and
c) the self-service terminal (1) comprises a reader element (11) by means of which official photographic documents and/or documents stored on an electronic medium and at least one document-specific feature are detected and - at least temporarily - stored, wherein
d) the self-service terminal (1) further comprises an evaluation unit or an access unit to an external evaluation unit for carrying out an authenticity and legitimacy check in the form of a comparison of all collected data and photographs with the original values of the user stored in the photograph document and/or on the electronic document, and furthermore e) an issuing member (12) by means of which, in the presence of a positive authenticity and legitimation check, an electronic and/or haptic document is issued and/or transmitted to the user (2) and/or to one or more recipients, which legitimises the user (2) to receive and/or to perceive and/or to carry out the product and/or service selection made in a),
**characterised in that**
the output device (12) is a printer or an interface for connecting the self-service terminal (1) to external systems, by means of which the determined data, which are generated into an optically readable code, are printed out, output and/or forwarded via the interfaces to external systems for further inspection and/or processing or handed over to the user.

## Revendications

1. Procédé de saisie et de génération ultérieure de données pour un utilisateur (2) d'un terminal en libre-service (1), qui comprend au moins un écran (10) ainsi qu'au moins un champ de saisie (100), le procédé comprenant les étapes de procédé suivantes :
a) affichage sur l'écran (10) de plusieurs produits et/ou services différents stockés dans une base de données interne ou externe, qui sont mis à la disposition de l'utilisateur (2) pour qu'il les sélectionne au moyen de l'au moins un champ de saisie (100),
b) stockage - au moins temporaire - des données collectées par l'utilisateur (2) dans le cadre de la sélection de produits et/ou de services en vue d'une exploitation ultérieure,
c) lecture d'au moins un document officiel avec photo et/ou d'un document électronique sur un support électronique au moyen d'au moins un organe de lecture (11) pour la saisie de documents officiels avec photo et/ou de documents enregistrés sur un support électronique,
d) saisie optique d'au moins une caractéristique spécifique au document de l'utilisateur et enregistrement - au moins temporaire - de celle-ci,
e) vérification de l'authenticité sous la forme d'une analyse d'authenticité du document photographique et/ou du document électronique ; et
f) contrôle d'authenticité et contrôle de légitimation sous forme d'une comparaison des caractéristiques spécifiques au document saisi par rapport aux valeurs originales de l'utilisateur lu dans le document photographique et/ou sur le document électronique, les caractéristiques biométriques du visage de l'utilisateur étant saisies dans le cadre du contrôle de légitimation au moyen d'un balayage biomélanique de l'utilisateur et comparé aux caractéristiques biométriques de l'image du visage du document photographique de l'utilisateur du terminal en libre-service,
g) dans lequel, en présence d'un contrôle d'authenticité et de légitimation positif, il se produit une génération et ensuite une édition et/ou une transmission d'un document électronique et/ou haptique à l'utilisateur (2) et/ou à un ou plusieurs destinataires, qui légitime l'utilisateur pour la réception et/ou la perception et/ou la réalisation de la sélection de produit et/ou de service effectuée
**caractérisé en ce que**
un code lisible optiquement est généré à partir des données déterminées, ce code est imprimé par l'intermédiaire d'un organe de sortie (12), est édité et/ou est transmis par l'intermédiaire d'interfaces à des systèmes tiers pour une consultation et/ou un traitement ultérieurs ou est remis à l'utilisateur.

2. Procédé selon la revendication 1,
**caractérisé en ce que**
le système tiers est un système d'encaissement ou de décaissement d'argent.

3. Procédé selon l'une des revendications 1 ou 2,
**caractérisé en ce que**
une image en direct, une photographie, une image de carte d'identité ou un enregistrement similaire de l'utilisateur est affiché sur le système tiers, au moyen duquel une nouvelle vérification de l'identité peut être effectuée.

4. Procédé selon l'une quelconque des revendications précédentes,
**caractérisé en ce que**
en cas d'erreur, d'accès matériel non autorisé et/ou d'accès logiciel, le système du terminal libre-service (1) est arrêté et rétabli dans son état d'origine à partir d'une image de données stockée sous forme cryptée.

5. Procédé selon l'une quelconque des revendications précédentes,
**caractérisé en ce que**
toutes les étapes de la procédure soient documentées de manière à ce qu'elles puissent être révisées.

6. Terminal en libre-service (1) pour la saisie et la génération ultérieure de données pour un utilisateur, qui comprend au moins un écran (10) ainsi qu'au moins un champ de saisie (100), dans lequel
a) le terminal en libre-service (1) comprend une base de données ou une unité d'accès à une base de données externe avec différents produits et/ou services, qui sont mis à la disposition de l'utilisateur (2) sur l'écran (10) pour la sélection au moyen de l'au moins un champ de saisie (100), où
b) une mémoire ou une unité d'accès à une mémoire externe pour le stockage - au moins temporaire - des données collectées par l'utilisateur (2) dans le cadre de la sélection du produit est prévue pour une utilisation ultérieure, et
c) le terminal libre-service (1) comprend un organe de lecture (11) au moyen duquel des documents officiels à photo et/ou des documents enregistrés sur un support électronique et au moins une caractéristique spécifique au document sont saisis et enregistrés - au moins temporairement -, dans lequel
d) le terminal libre-service (1) comprend en outre une unité d'évaluation ou une unité d'accès à une unité d'évaluation externe pour l'exécution d'un contrôle d'authenticité et de légitimation sous la forme d'une comparaison de toutes les données et photos relevées avec les valeurs originales de l'utilisateur mémorisées dans le document avec photo et/ou sur le document électronique, et en outre
e) comprend un organe d'émission (12) au moyen duquel, en présence d'un contrôle positif d'authenticité et de légitimation, un document électronique et/ou haptique est émis et/ou transmis à l'utilisateur (2) et/ou à un ou plusieurs destinataires, lequel document légitime l'utilisateur (2) pour recevoir et/ou percevoir et/ou effectuer la sélection de produits et/ou de services effectuée en a),
**caractérisé en ce que**
l'organe de sortie (12) est une imprimante ou une interface pour relier le terminal en libre-service (1) à des systèmes étrangers, au moyen de laquelle les données déterminées, qui sont générées pour former un code lisible optiquement, sont imprimées, sorties et/ou transmises par l'intermédiaire des interfaces à des systèmes étrangers pour une consultation et/ou un traitement ultérieurs ou sont remises à l'utilisateur.
